(19) Europäisches Patentamt

European Patent Office

Office européen des brevets

(11) **EP 0 421 934 B1**

(12) **EUROPÄISCHE PATENTSCHRIFT**

(45) Veröffentlichungstag und Bekanntmachung des Hinweises auf die Patenterteilung:
**13.03.1996 Patentblatt 1996/11**

(51) Int Cl.6: **H04J 3/06**, H04Q 11/04

(21) Anmeldenummer: **90810744.4**

(22) Anmeldetag: **28.09.1990**

(54) **Verfahren zur Nachrichtenübertragung zwischen PCM-Vielfachleitungen**

Method for information transmission between PCM highways

Procédé de transmission d'information entre lignes multiplex MIC

(84) Benannte Vertragsstaaten:
**AT BE CH DE ES FR GB IT LI NL SE**

(30) Priorität: **06.10.1989 CH 3669/89**

(43) Veröffentlichungstag der Anmeldung:
**10.04.1991 Patentblatt 1991/15**

(73) Patentinhaber:
- **Alcatel STR AG**
  **CH-8055 Zürich (CH)**
  Benannte Vertragsstaaten:
  **CH LI**
- **ALCATEL N.V.**
  **NL-1077 XX Amsterdam (NL)**
  Benannte Vertragsstaaten:
  **BE DE ES FR GB IT NL SE AT**

(72) Erfinder:
- **Jenny, Daniel E.**
  **CH-8044 Zürich (CH)**
- **Schmid, Ernst**
  **CH-8003 Zürich (CH)**

(56) Entgegenhaltungen:
EP-A- 0 102 810     FR-A- 2 304 146
US-A- 4 805 171

**Beschreibung**

Die vorliegende Erfindung betrifft ein Verfahren zur Uebertragung von Informationsbytes zwischen zwei nicht-synchronen PCM-Vielfachleitungen gleicher Nenn-Bittaktfrequenz wie es aus dem Oberbegriff des ersten Anspruchs hervorgeht.

Es sind verschiedene Verfahren bekannt, die sich für einen solchen Nachrichtenaustausch eignen würden, welche dank Verwendung geeigneter Codes und Stopftechnik ohne Datenverfälschung arbeiten, jedoch sehr komplex aufgebaute Einrichtungen zur Durchführung verlangen. Beispielsweise zeigt die US-A-4805171 einen PCM-Wandler für ein Telephon-Uebertragungssystem, mit auf der einen Seite einem T1-Primäranschluss mit einer Nenn-Bittaktfrequenz von 1,544 MHz, auf der anderen einem Anschluss einer Haustelephonzentrale mit einer Nenn-Bittaktfreuquenz von 2,048 MHz. Es ist ein Verfahren zur Uebertragung von Informationsbytes zwischen zwei nicht-synchronen PCM-Vielfachleitungen ungleicher Nenn-Bittaktfrequenz angegeben. Die zu Grunde ligende Anordnung umfasst je eine Schnittstellenschaltung für jede der zwei PCM-Vielfachleitungen. Die serie-parallelgewandelten Datenbytes werden abwechselnd und nach Bedarf im aus dem höherfrequenten Bittakt abgeleiteten Steuertakt der Wandlerschaltung in einen gemeinsamen Speicher eingeschrieben und ausgelesen. Die Steuerungen der beiden Anschlusseiten, das heisst, die beiden Schnittstellenschaltungen, sind miteinander verknüpft, was zu einer ziemlich aufwendigen Schaltung führt. Es kann nun die Forderung bestehen, dass die Schaltungseinheit, welche die "Durchschaltung" von codierter Sprachinformation von einem Kanal einer ersten PCM-Vielfachleitung zu einem Kanal einer zweiten Vielfachleitung und umgekehrt besorgt, möglichst einfach aufgebaut sein sollte, wobei gelegentliche Verdoppelungen oder Auslassungen von Codewörtern durchaus toleriert werden können, da diese die Sprachverständlichkeit nicht merkbar beeinflussen. Eine Forderung nach einer einfach aufgebauten Durchschalteinheit kann z.B. gestellt werden, wenn diese Einheit zur Befriedigung von bestimmten Kundenforderungen in grosser Zahl vorhanden sein sollte, jedoch nur relativ bescheidenen Forderungen der Sprachübertragung genügen muss, so dass komplex aufgebaute Einrichtungen bekannter Art nicht vernünftig amortisiert werden können und/oder zu viel Platz einnehmen.

Forderungen der oben erwähnten Art stellen sich z.B. bei Anrufweiterleitanlagen, wie sie bei den sog. "Grünen Nummern" in der Schweiz oder beim "Service 800" in den USA, eingesetzt werden, wenn diese Anrufweiterleitanlagen im Umfeld digitaler Vermittlungsanlagen verwendet werden. Jede dieser Anrufweiterleitanlagen weist eine grössere Anzahl von digitalen Leitungssätzen auf, die jeweils in Gruppen von 30 Sätzen zu einem Multileitungssatz zusammengefasst sind, wobei in einer Anrufweiterleitanlage jeweils mehrere solcher Multileitungssätze vorhanden sind. Jeder Multileitungssatz ist über zwei PCM-Vielfachleitungen mit einer oder zwei digitalen Vermittlungsanlagen verbunden. Diese PCM-Vielfachleitungen weisen zwar dieselbe Nenn-Bittaktfrequenz auf, sind aber untereinander nicht zwingend bitsynchron. Diese Multileitungssätze besorgen die oben erwähnte Durchschaltung der Kanäle zwischen ihren beiden PCM-Vielfachleitungen.

Es ist nun Aufgabe der Erfindung, ein Verfahren zur Uebertragung von Informationsbytes zwischen zwei nicht-synchronen PCM-Vielfachleitungen vorzusehen, das die Verwendung einer möglichst einfachen und entsprechend kleinen und billigen Durchschalteeinrichtung gestattet.

Gelöst wird diese Aufgabe gemäss den im Kennzeichen des ersten Anspruchs genannten Merkmalen. Vorteilhafte Weiterbildungen des erfindungsgemässen Verfahrens können den abhängigen Ansprüchen entnommen werden.

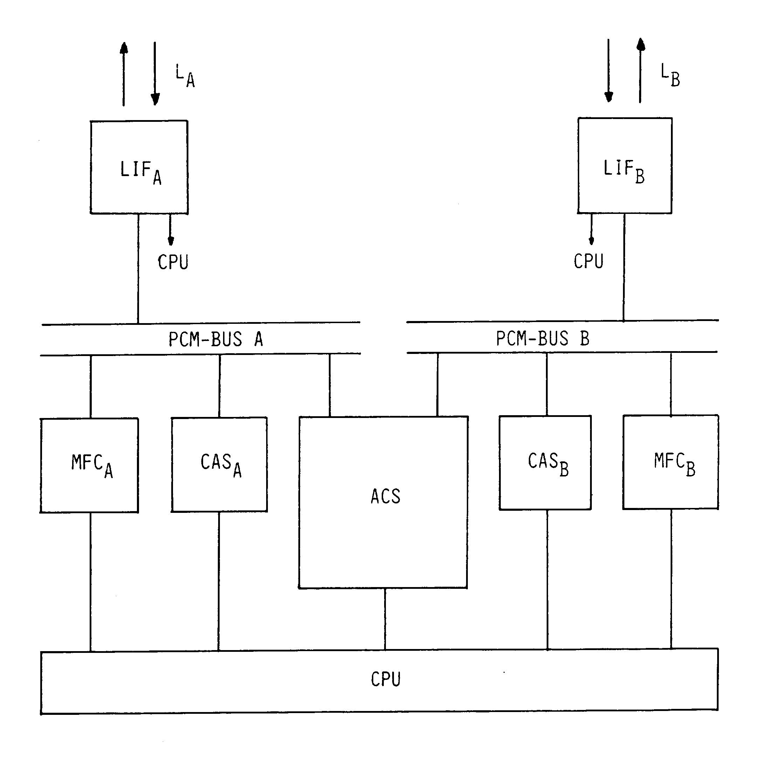

Ein Ausführungsbeispiel der Erfindung wird anhand der Zeichnung, welche ein vereinfachtes Prinzipschema eines digitalen Multileitungssatzes zeigt, näher erläutert.

Der in der Fig. im Prinzip gezeigte digitale Multileitungssatz weist zwei Schnittstellenschaltungen $LIF_A$ bezw. $LIF_B$ auf, die je über eine PCM-Vielfachleitung $L_A$ bezw. $L_B$ an einer oder an zwei unterschiedlichen digitalen Vermittlungsanlage(n) angeschlossen sind. Die Vielfachleitungen sind von üblicher Art, d.h. sie verfügen je Uebertragungsrichtung über einen getrennten Pfad mit 32 Kanälen von je 64 kBit/s, was einer Bitrate von $2 \times 2048$ kbit/s entspricht. Von den 32 Kanälen werden 30 für die Uebertragung von Sprachabtastwerten in Form von 8 Bit-Codewörtern verwendet. Diese Vielfachleitungen werden mit der von der Vermittlungsanlage aufgeprägten Bittaktfrequenz betrieben, welche innerhalb eines bestimmten Toleranzbereiches liegen muss. Die Schnittstellenschaltungen $LIF_A$ und $LIF_B$ führen die Serie/Parallel-Wandlung der über die Vielfachleitungen ankommenden Bytes bezw. die Parallel/Serie-Wandlung für die Abgabe von solchen Bytes an die Vielfachleitungen durch und sorgen für eine Zwischenspeicherung der Bytes, welche in paralleler Form an einen PCM-Bus abgegeben bezw. von diesem erhalten werden.

Die PCM-Busse selbst weisen neben den acht parallelen Datenleitungen noch fünf parallele Leitungen für die Kanalnummern und zwei parallele Leitungen für das Eingabe- bezw. Ausgabestrobesignal auf. Im Gegensatz zu den Vielfachleitungen verfügen die PCM-Busse A und B nicht über getrennte Pfade für die beiden Uebertragungsrichtungen, sondern sind Zweirichtungsbusse, die abwechselnd in Sende- und Empfangsrichtung betrieben werden, so dass sich auf den PCM-Bussen eine Transferrate von $2 \times 256$ kByte/s ergibt.

Bei Anrufweiterleitanlagen kommen die weiterzuleitenden Anrufe über die PCM-Vielfachleitung $L_A$ zur Schnittstellenschaltung $LIF_A$ und werden über die Schnittstellenschaltung $LIF_B$ und die PCM-Vielfachleitung $L_B$ weitergeleitet. Dabei sind natürlich Signale in beiden Richtungen zu übermitteln.

EP 0 421 934 B1

Die Schnittstellenschaltung $LIF_A$ ist mit dem PCM-Bus A verbunden, während die Schaltung $LIF_B$ mit dem PCM-Bus B verbunden ist. Am PCM-Bus A sind weiter eine Schaltung $MFC_A$ zum Empfang von MFC-Wahlsignalen und Abgabe von zugehörigen Quittungssignalen und eine Schaltung $CAS_A$ für den Empfang und die Abgabe von Signalisiersignalen über den für die Signalisierung reservierten Kanal der PCM-Vielfachleitung angeschlossen. In ähnlicher Weise sind am PCM-Bus B eine Schaltung $MFC_B$ zur Abgabe von MFC-Wahlsignalen und zum Empfang von zugehörigen Quittungssignalen und eine Schaltung $CAS_B$ zur Abgabe und zum Empfang von Signalisiersignalen angeschlossen. Die Art der verwendeten Signalisierung legt fest, ob die Funktionsblöcke MFC und CAS vorhanden sind und welche Merkmale sie aufweisen. Die Durchschalteeinheit ACS hat sowohl Zugriff zum PCM-Bus A als auch zum PCM-Bus B und dient dazu, die die Sprachinformation enthaltenden Bytes von Bus A zum Bus B und umgekehrt durchzuschalten. Alle diese Funktionsblöcke werden durch einen Prozessor CPU kontrolliert.

Wie bereits in der Aufgabe erwähnt, soll die Durchschalteeinheit aus Kosten- und Platzgründen möglichst einfach aufgebaut sein. Der einfachste Aufbau für diese Einheit ergibt sich, wenn die Durchschaltung zwischen zwei bytesynchron betriebenen Bussen erfolgen kann, wobei die Uebertragungsrichtung abwechselt. Um diese Bytesynchronität zu erreichen, werden die beiden Busse mit der gleichen, von der(n) Bittaktfrequenz(en) der PCM-Vielfachleitung(en) unabhängigen Frequenz betrieben. Wie bereits erwähnt, haben die PCM-Vielfachleitungen denselben Nennwert für die Bittaktfrequenz, dieser Nennwert weist aber eine gewisse Toleranz von z.B. ± 50 ppm auf.

Um beim Uebergang von den PCM-Vielfachleitungen auf die entsprechenden Busse keine Auslassungen zu provozieren, wird die gemeinsame Transferrate der Busse so gewählt, dass sie auch bei vollständiger Ausnützung des Toleranzbandes in positiver Richtung durch eine oder beide der PCM-Vielfachleitungen und bei Ausnützung des buseigenen, engeren Toleranzbandes in negativer Richtung einer Bittaktfrequenz gerade noch oberhalb der Bittaktfrequenz der PCM-Vielfachleitungen entspricht. Es ist klar, dass es bei unterschiedlichen Bittaktfrequenzen der beiden PCM-Vielfachleitungen bei der Durchschaltung von Sprachbytes zwischen diesen Vielfachleitungen zu gelegentlichen Verdoppelungen in der einen Uebertragungsrichtung und zu gelegentlichen Auslassungen in der andern Uebertragungsrichtung kommt, was, wie bereits erwähnt, die Sprachverständlichkeit nicht merkbar beeinflusst.

Um die Durchschalteeinheit so einfach wie möglich zu machen, werden die beiden Busse so betrieben, dass beide zur selben Zeit eine Eingabe- bezw. eine Ausgabephase haben. Eine Betrachtung der beiden Busse über einige Zeitintervalle sieht wie folgt aus:

| Bus A: | $I_{26}$ | $O_4$ | $I_{27}$ | $O_5$ | $I_{28}$ | $O_6$ |
|--------|----------|-------|----------|-------|----------|-------|
| Bus B: | $I_{13}$ | $O_{12}$ | $I_{14}$ | $O_{13}$ | $I_{15}$ | $O_{14}$ |

Dabei bedeuten I = Eingabe = Empfang von der PCM-Vielfachleitung und O = Ausgabe = Senden auf die PCM-Vielfachleitung. Die Indices geben die Kanalnummern der PCM-Vielfachleitungen an, von denen die Bytes kommen bezw. an die sie abzugeben sind. Wie obige Betrachtung zeigt, sind die beiden bytesynchronen Busse auch synchron bezüglich ihrer Eingabe- und Ausgabezeitpunkte, sie sind jedoch nicht kanalsynchron. Die Schnittstellenschaltungen LIF sind so organisiert, dass sie nur vollständige Bytes an einen Bus abgeben bezw. ein Byte von einem Bus nur annehmen, wenn sie dazu in der Lage sind. Dadurch werden Verfälschungen von Bytes im Verkehr zwischen Schnittstellenschaltungen und Bussen vermieden. Es kommen aber gelegentlich Verdoppelungen oder Auslassungen von Bytes vor, wie dies im nachfolgenden Abschnitt beschrieben wird.

Wenn z.B. die PCM-Vielfachleitung $L_A$ eine höhere Bittaktfrequenz aufweist als die PCM-Vielfachleitung $L_B$, kommt es gelegentlich zu Verdoppelungen von Bytes in der Uebertragungsrichtung Leitung $L_B$ zu Leitung $L_A$, wie dies die folgende Betrachtung zeigt:

| Bus A: | I | $O_{13}$ | I | $O^*_{14}$ | I | ... | I | $O_{13}$ | I | $O^*_{14}$ | I |
|--------|---|----------|---|-----------|---|-----|---|----------|---|-----------|---|
| Bus B: | $I_{13}$ | O | $I_{14}$ | O | I | ... | $I_{13}$ | O | ** | O | $I_{14}$ |

Wie aus der obigen Betrachtung ersichtlich ist, erfolgt auf Bus B bei ** in der Eingabephase für Kanal 14 keine neue Eingabe, weil die Schnittstellenschaltung $LIF_B$ noch nicht bereit ist für die Abgabe dieses Bytes, so dass das von der Durchschalteeinheit für die Ausgabe von Kanal 14 an Bus A angelegte und mit * bezeichnete Byte $O_{14}$ zweimal ausgelesen wird.

Bei gleichen Bedingungen wie im vorausgegangenen Abschnitt kommt es in der andern Uebertragungsrichtung, d.h. von Leitung $L_A$ zu Leitung $L_B$, gelegentlich zu Auslassungen von Bytes wie dies die nachfolgende Betrachtung zeigt:

| Bus A: | 0 | $I_7$ | 0 | $\overset{*}{I_8}$ | 0 | ... | 0 | $I_7$ | 0 | $I_8$ | 0 |
|---|---|---|---|---|---|---|---|---|---|---|---|
| Bus B: | $0_7$ | I | $0_8$ | I | $0_9$ | ... | $0_7$ | I | ** | I | $0_8$ |

Wie aus der obigen Betrachtung ersichtlich ist, kann das mit * bezeichnete Byte $I_8$ an dem mit ** bezeichneten Zeitpunkt nicht ausgegeben werden, weil die Schnittstellenschaltung $LIF_B$ noch nicht bereit ist für die Annahme dieses Bytes. Bei der nächsten Eingabephase wird das ursprüngliche Byte $I_8$ durch ein neues Byte $I_8$ überschrieben, so dass ersteres nicht ausgegeben wurde, also eine Auslassung erfolgt ist.

Soll der Kanal durchgeschaltet werden, wird das Byte von der Durchschalteinheit auf dem Bus gelesen und in ihr gespeichert. Da der Unterschied zwischen der Bittaktfrequenz der PCM-Vielfachleitung und der der Transferrate des PCM-Bus entsprechenden Bittaktfrequenz nur durch Leerstellen auf dem PCM-Bus ausgeglichen wird, findet bis zur Abspeicherung in der Durchschalteinheit nur eine zeitliche Verschiebung statt, nicht aber eine Auslassung oder Verdoppelung oder gar Verfälschung des Bytes.

Wird das Byte vom PCM-Bus auf der andern Seite wieder gelesen, treten dabei die Verdoppelungen und Auslassungen auf. Es treten zwar auf jeder Seite Leerstellen auf, doch wird die schnellere Seite weniger Leerstellen erzeugen müssen. Diese Leerstellen in der Ausgabephase treten dann auf, wenn die Schnittstellenschaltung noch nicht in der Lage ist, ein weiteres neues Byte anzunehmen und deshalb während der Ausgabephase das Ausgangsstrobesignal nicht aktiviert. Ist die lesende Seite schneller als die schreibende Seite (Seite A im obigen ersten Beispiel), findet auf der lesenden Seite gelegentlich eine Verdoppelung statt. Ist die lesende Seite langsamer als die schreibende Seite (Seite B im obigen zweiten Beispiel), findet während des Lesens gelegentlich eine Auslassung statt.

Wie aus der vorangegangenen Beschreibung ersichtlich ist, folgen sich auf den beiden Bussen Eingabe- und Ausgabephasen abwechselnd und zu festen Zeitpunkten, unabhängig davon, ob die Schnittstellenschaltungen LIF für die Abgabe oder die Annahme eines Bytes bereit sind oder nicht. Der Bus offeriert also einen Zeitpunkt, zu dem die Schnittstellenschaltung LIF ein Byte abgeben oder verlangen kann. Will die Schnittstellenschaltung LIF das Angebot wahrnehmen, aktiviert sie auf dem PCM-Bus ein Eingabe- bzw. Ausgabestrobesignal, gibt die Nummer des betreffenden Kanals auf den Bus und gibt das entsprechende Byte ab oder holt es vom PCM-Bus. Durch die Strobesignale und die Kanalnummer werden die andern Funktionsblöcke am Bus orientiert, dass sie ein Byte eines bestimmten Kanals annehmen oder abgeben müssen.

Will die Schnittstellenschaltung gelegentlich ein Byte auslassen, aktiviert sie die Strobesignale nicht und alle Baugruppen am PCM-Bus verhalten sich passiv. Dies bewirkt eine zeitliche Verschiebung der Abgabe- bzw. Annahmesequenz. Das nicht abgegebene Byte wird auf der Schnittstellenschaltung behalten bzw. die Annahme eines Bytes durch die Schnittstellenschaltung wird nicht durchgeführt und die Abgabe bzw. Annahme wird erst etwas später ausgeführt, d.h. in der nächsten Eingabe-bzw. Ausgabephase.

Mit welchen Funktionsblöcken am PCM-Bus die Schnittstellenschaltung in einem Kanal Bytes austauscht, ist z.T. fest gegeben (CAS) und z.T. legt das der Prozessor CPU fest (MFC, ACS). Während des Aufbaus eines Telefongesprächs sind im gleichen Kanal mehrere Funktionsblöcke nötig, die zeitlich hintereinander vom Prozessor CPU aktiviert und desaktiviert werden. Damit bei einer Umschaltung von einem Funktionsblock auf einen andern im gleichen Kanal nicht die Situation entsteht, dass zwei Funktionsblöcke gleichzeitig ein Byte auf den PCM-Bus abgeben wollen, sind die Funktionsblöcke untereinander mit Signalen "Ausgabe-Priorität" verriegelt, so dass auch bei einer sich kurzzeitig überlappenden Aktivierung von zwei oder mehr Funktionsblöcken durch den Prozessor CPU nur jener mit der höchsten Priorität sein Byte abgeben kann.

Wie aus der vorausgehenden Beschreibung ersichtlich ist, wird die Verantwortung für die Vermeidung von Verfälschungen von Sprachbytes im Verkehr zwischen den PCM-Vielfachleitungen in die Schnittstellenschaltungen an der Peripherie verlegt, so dass die beiden PCM-Busse problemlos bytesynchron gemacht werden können. Dadurch, dass die beiden PCM-Busse bytesynchron betrieben werden, kann die Forderung nach einem einfachen Aufbau der Durchschalteeinheit erfüllt werden. Sie kann z.B. ein handelsübliches "Dual-Port-RAM" mit einer Speichertiefe von mindestens 32 Bytes sein, d.h. ein integrierter Speicherschaltkreis mit freiem Zugriff und zwei getrennten Daten-Ein/Ausgängen (Ports), an welche die beiden Busse A und B angeschlossen sind, über welche entweder an beiden Ports gleichzeitig eingeschrieben oder ausgelesen wird. Es sind ebenfalls zwei getrennte Adresseneingänge (Ports) vorhanden, an welchen die jeweiligen Kanalnummerleitungen der beiden PCM-Busse angeschlossen sind. Der Speicher ist so organisiert, dass ein Adressenbereich für das Einschreiben ab Bus A und für das Auslesen auf Bus B vorgesehen ist, während der andere Adressbereich für das Einschreiben ab Bus B und für das Auslesen auf Bus A vorgesehen ist. Durch diese Speicherunterteilung werden alle Probleme vermieden, die sich aus einer Kollision von Einschreiben und Auslesen in die gleiche Speicherzelle ergeben könnten. Für beide Speicherhälften (Ports) sind je noch Eingänge für die Umschaltung "Einschreiben/Auslesen" und für "Port aktiviert/nicht aktiviert" vorhanden. Dank der Verwendung eines Dual-Port-RAMs als Durchschalteinheit in Form einer "Zweiweg-Mailbox" kann ein sehr einfacher Aufbau bei gleichzeitig einfacher Speicherorganisation erreicht werden.

**Patentansprüche**

1. Verfahren zur Uebertragung von Informationsbytes zwischen zwei nicht-synchronen PCM-Vielfachleitungen ($L_A$, $L_B$) über je eine Schnittstellenschaltung (LIF$_A$, LIF$_B$), welche eine Serie/Parallel-Wandlung durchführt, wobei die Uebertragung der Informationsbytes durch eine Durchschalteeinheit (ACS) mit zweiseitig beschreib- und auslesbarem Speicher erfolgt, dadurch gekennzeichnet, dass die zwei PCM-Vielfachleitungen ($L_A$, $L_B$) die gleiche Nenn-Bittaktfrequenz aufweisen, mit je einem PCM-Bus zusammenarbeiten, welche bytesynchron mit einer Transferrate betrieben werden, die einer höheren Bittaktfrequenz als der höchsten zulässigen Bittaktfrequenz der PCM-Vielfachleitungen entspricht, und das Einschreiben der Bytes von beiden PCM-Bussen in den Speicher der Durchschalteeinheit und das Auslesen der Bytes aus dem Speicher in die beiden PCM-Busse abwechselnd, für beide PCM-Busse gleichzeitig und zu festen Zeitpunkten erfolgt.

2. Verfahren nach Anspruch 1, dadurch gekennzeichnet, dass jeder der beiden PCM-Busse als Zweirichtungsbus mit abwechselnder Uebertragung in der einen und anderen Richtung betrieben wird, und der untere Toleranzgrenzwert der Transferrate der Busse dem oberen Toleranzgrenzwert der Bittaktfrequenz der PCM-Vielfachleitungen entspricht.

3. Verfahren nach Anspruch 2, dadurch gekennzeichnet, dass die Eingabe von Informationsbytes durch die Schnittstellenschaltungen (LIF$_A$, LIF$_B$) auf beide PCM-Busse gleichzeitig erfolgt, dass die Ausgabe von Informationsbytes durch die PCM-Busse an beide Schnittstellenschaltungen gleichzeitig erfolgt, und dass Eingabe und Ausgabe abwechselnd und zu festen Zeitpunkten erfolgen.

4. Verfahren nach Anspruch 3, dadurch gekennzeichnet, dass die Schnittstellenschaltungen (LIF$_A$, LIF$_B$) die Abgabe von Bytes an den zugehörigen PCM-Bus und die Annahme von Bytes vom zugehörigen PCM-Bus so organisieren, dass eine Byteverfälschung vermieden wird.

**Claims**

1. A process for the transmission of information bytes between two non-synchronous PCM highways ($L_A$, $L_B$) in each case via an interface circuit (LIF$_A$, LIF$_B$) which carries out a series/parallel conversion, where the transmission of the information bytes is carried out by a switching unit (ACS) with a memory which can be written into or read out bilaterally, characterised in that the two PCM highways ($L_A$, $L_B$), which possess the same nominal bit rate frequency, in each case cooperate with a PCM bus, which PCM buses are operated in byte synchronism with a transfer rate which corresponds to a higher bit rate frequency than the highest permissible bit rate frequency of the PCM highways, and the input of the bytes from the two PCM buses into the memory of the switching unit and the read-out of the bytes from the memory into the two PCM buses take place in alternation, simultaneously for the two PCM buses, and at fixed times.

2. A process as claimed in Claim 1, characterised in that each of the two PCM buses is operated as a bidirectional bus with alternating transmission in the one and the other direction, and the lower tolerance limit value of the transfer rate of the buses corresponds to the upper tolerance limit value of the bit rate frequency of the PCM highways.

3. A process as claimed in Claim 2, characterised in that the input of information bytes by the interface circuits (LIF$_A$, LIF$_B$) to the two PCM buses takes place simultaneously, that the output of information bytes by the PCM buses to the two interface circuits takes place simultaneously, and that the input and output take place in alternation and at fixed times.

4. A process as claimed in Claim 3, characterised in that the interface circuits (LIF$_A$, LIF$_B$) organise the emission of bytes to the associated PCM bus and the acceptance of bytes from the associated PCM bus in such manner that the adulteration of bytes is avoided.

**Revendications**

1. Procédé de transmission d'octets d'information entre deux lignes multiplex MIC non synchrones ($L_A$, $L_B$) par le biais respectivement d'un circuit d'interface (LIF$_A$, LIF$_B$) qui effectue une conversion série/parallèle, la transmission des octets d'information s'effectuant par une unité de commutation (ACS) comportant une mémoire avec possibilité d'introduction et d'extraction des deux côtés, caractérisé en ce que les deux lignes multiplex MIC ($L_A$, $L_B$) présentent la même fréquence d'horloge binaire nominale, coopèrent chacune avec un bus MIC, lesquels bus sont exploités avec synchronisme d'octets et avec un débit qui correspond à une fréquence d'horloge binaire supérieure & la fréquence d'horloge binaire maximale admissible des lignes multiplex MIC et en ce que l'introduction des octets depuis les deux bus MIC dans la mémoire de l'unité de commutation, et l'extraction des octets hors de la mémoire dans les deux bus MIC s'effectuent de façon alternée, simultanément pour les deux bus MIC et à des moments fixes.

2. Procédé selon la revendication 1, caractérisé en ce que chacun des deux bus MIC est exploité comme un bus bidirectionnel avec transmission alternée dans un sens et dans l'autre, et en ce que la valeur limite inférieure de tolérance du débit des bus correspond à la valeur limite supérieure de tolérance de la fréquence d'horloge binaire des lignes multiplex MIC.

3. Procédé selon la revendication 2, caractérisé en ce que l'entrée d'octets d'information s'effectue par les circuits d'interface ($LIF_A$, $LIF_B$) simultanément sur les deux bus MIC, en ce que la sortie d'octets d'information par les bus MIC s'effectue simultanément sur les deux circuits d'interface et en ce que l'entrée et la sortie s'effectuent de façon alternée et à des moments fixes.

4. Procédé selon la revendication 3, caractérisé en ce que les circuits d'interface ($LIF_A$, $LIF_B$) organisent la délivrance d'octets au bus MIC correspondant et l'acceptation d'octets depuis le bus MIC correspondant de façon à éviter une falsification d'octets.